# EUROPEAN PATENT APPLICATION

(11) **EP 4 692 622 A2**
(43) Date of publication of application: **11.02.2026**
(21) Application number: 25193977.3
(22) Date of filing: 05.08.2025
(51) Int. Cl.: F16L 21/06, F16L 47/08, F16L 47/12

(54) **PIPE BELL END REINFORCING DEVICE AND PIPE STOP**

(30) Priority: 06.08.2024 US 202463679897 P; 07.10.2024 US 202463704457 P
(71) Applicant: Press-Seal Corporation, Fort Wayne, IN 46808 (US)
(72) Inventor: Jones, James C., Waxahachie, TX 75165 (US); Gamble, Jimmy D., Kendallville, IN 46755 (US); Skinner, Peter J., Roanoke, IN 46783 (US); Skinner, Daniel K., Fort Wayne, IN 46814 (US); Gunckel, Daniel Joseph, Chesterton, IN 46304 (US)
(74) Representative: RACKETTE Patentanwälte PartG mbB Rechtsnachfolger Dr. Joachim Rüttgers

(57) **Abstract**

A piping system including each of a first pipe (102) comprising a bell end (104) and a groove (112) formed in the bell end and a gasket (114) positioned within the groove; a second pipe (106) comprising a spigot end (108), the spigot end position within the bell end of the first pipe and in contact with the gasket; a bell end reinforcing device (450) positioned external to at least a portion of the bell end (104) of the first pipe, the bell reinforcing device providing structural reinforcement to an exterior surface of the bell end. The piping system may also comprise a pipe stop (850a) where the pipe stop mechanically interfaces with the bell reinforcing device (450, 850b) to inhibit relative axial movement between the first pipe and second pipe, such as by a dovetail connection.

## Description

### CROSS-REFERENCE TO RELATED APPLICATIONS

This application claims priority to U.S. Patent Application No. 63/679,897, entitled "PIPE BELL END REINFORCING DEVICE", filed on August 6, 2024, and U.S. Provisional Patent Application No. 63/704,457 entitled "PIPE BELL END REINFORCING DEVICE AND PIPE STOP", filed on October 7, 2024, the entire disclosures of which are incorporated by reference in their entireties.

### BACKGROUND

### 1. Technical Field.

The present disclosure relates to restraining systems utilized for bell and spigot-type piping, and particularly, reinforcing system/devices used for reinforcing bell and spigot-type polyvinyl chloride (PVC) piping connections for water supply piping.

### 2. Background of the Present Disclosure.

Polyvinyl Chloride (PVC) is rapidly becoming the preferred piping material for residential and commercial water supply systems (e.g., as compared with ductile iron or copper piping traditionally used). PVC piping is a durable, lightweight, and cost-effective material, which is resistant to both corrosion and chemical damage. PVC piping is also known for its longevity and low maintenance requirements and makes it particularly suitable for water supply systems.

One type of PVC piping design commonly used for water supply systems is gasketed bell and spigot PVC pipe. Gasketed bell and spigot PVC pipe is a type of PVC pipe connection where one end (the bell) is flared out, forming a groove, and fitted with an internal gasket, and the opposing end (the spigot) is simple cylindrical. The spigot end of one pipe segment is inserted into the bell end of another pipe segment, creating a watertight seal through compression of the gasket between the bell and the spigot. This design is widely used for its ease of installation, reliable sealing, and suitability for water supply systems.

Importantly, residential and commercial water supply systems must meet or exceed both AWWA (American Water Works) and ASTM (American Society for Testing and Materials) piping standards, in both performance and materials of construction. In order to meet such standards, a pressure test is performed for the connected piping system, where high pressure water is pumped into the hydraulic loop at pressures far above the normal operating pressure of the water supply system, to determine if the piping, and particularly the piping connections maintain integrity and leak-free performance.

As described previously, PVC pipe itself can withstand relatively high pressures (e.g., meeting or exceeding AWWA/ASTM standards), but once multiple PVC piping elements are connected in series, the joints between the individual piping elements may begin to leak, resulting in failure of the pressure test. In the case where bell and spigot-type PVC piping is used, once the piping system is under high pressure, the bell and the spigot connections may begin to separate due to the high pressure, resulting in leaks and/or individual piping segments separating from one another and failure of the pressure test. Although rare in strait runs of connected PVC pipes, leaking and separation problems are commonly observed at connections to fittings, such as elbows, tees, couplings, reducers, caps, and valves.

In addition to the pressure tests resulting in leaks/failure of the piping system, an issue known as water hammer can arise, resulting in failure of the piping connections. Water hammer is a hydraulic phenomenon that occurs when a fluid in motion is forced to stop or change direction suddenly, causing a pressure surge or wave. This commonly happens when a valve closes quickly, or a pump shuts down abruptly, such as when fire suppression systems engage or, in the case of municipal water supply systems, when emergency firefighting connections are made (e.g., a fire hydrant is opened/closed, a pumper truck is connected, etc.,). This results in a pressure spike within the piping, far exceeding the normal operational pressure of the piping system, which may directly cause leaks/failure of the hydraulic system, similar to the pressure testing scenario.

Therefore, what is needed is a system for securely joining bell and spigot-type PVC piping, such that once under high pressure, the connections between the individual piping segments and/or fittings maintain a water-tight seal, meeting or exceeding the associated ASTM and AWWA testing standards and/or high pressure scenarios.

### SUMMARY

The present disclosure provides an external reinforcement device for restraining bell and spigot type PVC pipes which may be subject to high-pressure operational conditions (e.g., pressure tests, water hammer, etc.). The external reinforcement device reinforces the bell of the PVC pipe, thereby ensuring that the bell does not separate from the spigot when the piping arrangement is subject to high pressure.

The reinforcement device can be of various designs, such as a "pipe jacket" type reinforcement device, or a "pipe saddle" type reinforcement device, as will be described in further detail herein. A bell end reinforcing device type reinforcement device may be used for a) relatively small pipe diameters and/or lower-pressure piping requirements, as well as b) medium diameter pipe and/or moderate-pressure piping requirements. The pipe saddle type reinforcement device may be used for larger diameter pipes and/or higher-pressure piping requirements.

In one form thereof, the present disclosure provides a piping system comprising a first pipe comprising a bell end and a groove formed in the bell end, a gasket positioned within the groove; a second pipe comprising a spigot end, the spigot end position within the bell end of the first pipe and in contact with the gasket; and a bell end reinforcing device positioned external to at least a portion of the bell end of the first pipe, the bell reinforcing device providing structural reinforcement to an exterior surface of the bell end.

In another form thereof, the present disclosure provides a pipe system, comprising a first pipe having a spigot end coupled to an external pipe stop; and a second pipe having a bell end and an internal gasket, the second pipe coupled to a bell end reinforcing device, wherein the spigot end of the first pipe is received within the bell end of the second pipe where the internal gasket sealingly engages with first pipe, and the bell end reinforcing device mechanically interfaces with the pipe stop to inhibit relative axial movement between the first pipe and second pipe.

In another form thereof, the present disclosure provides a first pipe having a spigot end coupled to an external pipe stop; and a pipe fitting having a bell end and an internal gasket, the second pipe coupled to a bell end reinforcing device, wherein: the spigot end of the first pipe is received within the bell end of the pipe fitting where the internal gasket sealingly engages with first pipe, and the bell end reinforcing device mechanically interfaces with the pipe stop to inhibit relative axial movement between the first pipe and second pipe.

It is to be understood that both the foregoing general description and the following detailed description are exemplary and explanatory only and are not restrictive of the invention as claimed. Other embodiments will be apparent to those skilled in the art from consideration of the specification and practice of the invention disclosed herein.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1 is a cross sectional view of a bell and spigot-type PVC piping connection.
FIG. 2 is a perspective view of a traditional two-part external support system for joining bell and spigot-type PVC piping.
FIG. 3 is a perspective view of a traditional internal restraining gasket for joining bell and spigot-type PVC piping.
FIG. 4 is perspective view of a first embodiment of a pipe bell end reinforcing device of the present disclosure.
FIG. 5 is a cross sectional view of the first embodiment of the pipe bell end reinforcing device.
FIG. 6 is a perspective view of two alternative arrangements of the first embodiment of the pipe bell end reinforcing device.
FIG. 7 is a perspective view of a second embodiment of the pipe bell end reinforcing device.
FIG. 8 is a cross sectional view of the second embodiment of the pipe bell end reinforcing device.
FIG. 9 is a perspective view of two alternative arrangements of the second embodiment of the pipe bell end reinforcing device.
FIG. 10 is perspective view of a third embodiment of the pipe bell end reinforcing device.
FIG. 11A is a cross-sectional view of the third embodiment of the bell reinforcing structure.
FIG. 11B is a cross-sectional view of an alternative arrangement of the third embodiment of the bell reinforcing structure.
FIG. 11C is a cross-sectional view of a further alternative arrangement of the third embodiment of the bell reinforcing structure.
FIG. 11D is a cross-sectional view of a further alternative arrangement of the third embodiment of the bell reinforcing structure.
FIG. 11E is a cross-sectional view of a further alternative arrangement of the third embodiment of the bell reinforcing structure.
FIG. 12 is a perspective view of two alternative arrangements of the third embodiment of the pipe bell end reinforcing device.
FIG. 13A is a first perspective view of a fourth embodiment of the pipe bell end reinforcing device.
FIG. 13B is a second perspective view of a fourth embodiment of the pipe bell end reinforcing device.
FIG. 14 is a cross sectional view of the fourth embodiment of the bell reinforcing structure.
FIG. 15A is a first perspective view of a pipe stop of the fourth embodiment of the bell reinforcing device.
FIG. 15B is a second perspective view of a pipe stop of the fourth embodiment of the bell reinforcing device.
FIG. 16A is a first perspective view of a bell end reinforcing device of the fourth embodiment of the bell reinforcing device.
FIG. 16B is a second perspective view of a bell end reinforcing device of the fourth embodiment of the bell reinforcing device.
FIG. 17A is a first perspective view of a fifth embodiment of the pipe bell end reinforcing device.
FIG. 17B is a second perspective view of a fifth embodiment of the pipe bell end reinforcing device.
FIG. 18 is a perspective view of a hinge connection of the pipe stop and bell end reinforcing device of the fifth embodiment of the bell reinforcing structure.
FIG. 19 is a cross-sectional view of the fifth embodiment of the bell reinforcing structure.
FIG. 20A is a first perspective view of a pipe stop of the fifth embodiment of the bell reinforcing device.
FIG. 20B is a second perspective view of a pipe stop of the fifth embodiment of the bell reinforcing device.
FIG. 21A is a first perspective view of a bell end reinforcing device of the fifth embodiment of the bell reinforcing device.
FIG. 21B is a second perspective view of a bell end reinforcing device of the fifth embodiment of the bell reinforcing device.
FIG. 22A is a first perspective view of a sixth embodiment of the pipe bell end reinforcing device.
FIG. 22B is a second perspective view of a sixth embodiment of v pipe bell end reinforcing device.
FIG. 23A is a cross-sectional view of the sixth embodiment of the bell reinforcing structure.
FIG. 23B is a cross-sectional view of an alternative arrangement of a sixth embodiment of the bell reinforcing structure.
FIG. 23C is a cross-sectional view of a further alternative arrangement of a sixth embodiment of the bell reinforcing structure.
FIG. 23D is a cross-sectional view of a further alternative arrangement of a sixth embodiment of the bell reinforcing structure.
FIG. 23E is a cross-sectional view of a further alternative arrangement of a sixth embodiment of the bell reinforcing structure.
FIG. 23F is a cross-sectional view of a further alternative arrangement of a sixth embodiment of the bell reinforcing structure.
FIG. 24A is a first perspective view of a pipe stop of the sixth embodiment of the bell reinforcing device.
FIG. 24B is a second perspective view of a pipe stop of the sixth embodiment of the bell reinforcing device.
FIG. 25A is a first perspective view of a bell end reinforcing device of the sixth embodiment of the bell reinforcing device.
FIG. 25B is a second perspective view of a bell end reinforcing device of the sixth embodiment of the bell reinforcing device.
FIG 26 is a perspective view of an alternative arrangement of the sixth embodiment of the bell reinforcing device.
FIG. 27A is a first perspective view of a seventh embodiment of the pipe bell end reinforcing device.
FIG. 27B is a second perspective view of a seventh embodiment of the pipe bell end reinforcing device.
FIG. 27C is a third perspective view of a seventh embodiment of the pipe bell end reinforcing device.
FIG. 28A is a cross-sectional view of the seventh embodiment of the bell reinforcing structure before a bayonet connection is formed.
FIG. 28B is a cross-sectional view of the seventh embodiment of the bell reinforcing structure after a bayonet connection is formed.
FIG. 29A is a first perspective view of a pipe stop of the seventh embodiment of the bell reinforcing device.
FIG. 29B is a second perspective view of a pipe stop of the seventh embodiment of the bell reinforcing device.
FIG. 30A is a first perspective view of a bell end reinforcing device of the seventh embodiment of the bell reinforcing device.
FIG. 30B is a second perspective view of a bell end reinforcing device of the seventh embodiment of the bell reinforcing device.
FIG. 31A is a first perspective view of a bell end reinforcing device of the seventh embodiment of the bell reinforcing device.
FIG. 31B is a first perspective view of a bell end reinforcing device of the seventh embodiment of the bell reinforcing device.
FIG 32A is a first perspective view of a bell reinforcing device used in conjunction with a pipe fitting.
FIG 32B is a second cross sectional view of a bell reinforcing device used in conjunction with a pipe fitting.

Corresponding reference characters indicate corresponding parts throughout the several views. Although the exemplifications set out herein illustrate embodiments of the invention, in several forms, the embodiments disclosed below are not intended to be exhaustive or to be construed as limiting the scope of the invention to the precise forms disclosed.

### DETAILED DESCRIPTION

The present disclosure is directed to a pipe bell end reinforcing device, such as a bell end reinforcing device or a pipe saddle, that once applied to the bell end of a bell and spigot-type PVC pipe, reinforces the bell end of the pipe, significantly increasing the strength of the piping connection. By reinforcing the bell of the connection, the PVC piping systems can meet or exceed ASTM and/or AWWA standards, enabling the PVC pipe for use as water supply piping in both industrial and residential applications. The bell end reinforcing device may be used in combination with/coupled to a pipe stop, providing additional support/rigidity to the piping connection.

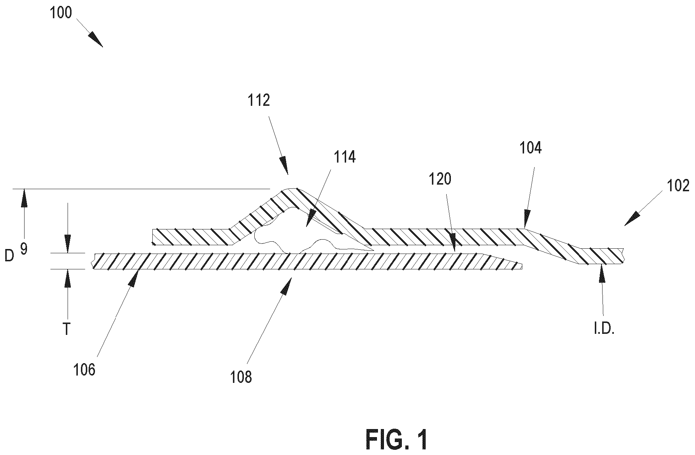

As described previously, bell and spigot type piping connections are commonly used as water supply piping. An example of a bell and spigot pipe is illustrated as piping assembly 100 in FIG. 1. Piping assembly 100 includes both first pipe 102 and second pipe 106. Here, bell end 104 of first pipe 102 has an expanded diameter as compared to spigot end 108 of second pipe 106. Bell end 104 also includes a groove 112, which receives seal 114. During assembly, the spigot end 108 of pipe 106 is inserted into bell end 104 of pipe 102, where seal 114 retains spigot end 108 of second pipe 106 within bell end 104 of pipe 102.

However, when piping assembly 100 is pressure tested, or when piping assembly encounters a water hammer or other high-pressure scenario, seal 114 may begin to leak, or in some cases, fail, when high pressure water is forced through fluid channel 120, causing the bell portion 104 to expand away from the spigot end 108. This can lead to leaking between the piping segments, or in more serious cases, separation of the piping segments. This problem is exacerbated when there are pipe fittings (elbows, valves, piping T's, expanders/reducers, etc.) is placed in close proximity to piping connections (e.g., either immediately upstream or downstream of the bell and spigot connection), and even more particularly, at the connections to such pipe fittings.

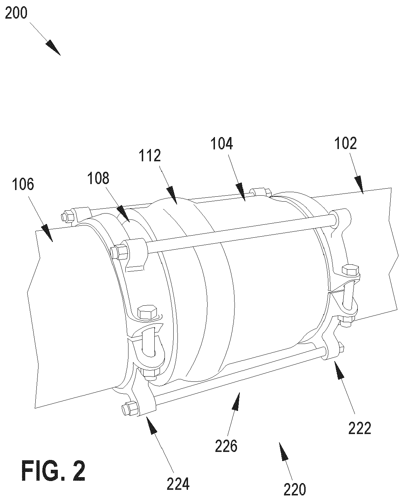

Accordingly, there is a need to restrain the connection between first pipe 102 and second pipe 106, such that the piping connection does not leak, fail, and/or separate. One way to solve this problem is with the two-part clamping-type external restraint system as illustrated in FIG. 2. FIG. 2 illustrates piping system 200 which includes each of first pipe 102, second pipe 106-, and two-part clamping-type restraint system 220. Here, two-part clamping-type restraining system 220 includes first clamping portion 222 which is fitted about the outer circumference of first pipe 102 prior to the bell end 104, and second clamping portion 222 fitted to the outer circumference of second pipe 106 prior to the spigot end 108. Rods 226 are used to retain the position of first part 222 and second part 224 with respect to one another (e.g., via a fixed, threaded connections, bolt/nuts, etc.) such that pipes 102 and 106 maintain their position. When a high-pressure scenario is encountered, two-part clamping-type restraint system 220 therefore prevents pipes 102 and 106 from separating (e.g., acts as a restraining system).

However, two-part clamping-type restraint systems have numerous drawbacks. Firstly, retaining the two pipe's positions does not necessarily resolve seal-related issues, as high pressure may still leak through the bell end since there is no reinforcement provided to this portion of the piping connection. Secondly, the installation of this type of restraining system is highly complex. To install the restraint a serviceman/woman must enter the trench where the pipe is being run, assemble the clamping portions on both pipes with the numerous complex nut/bolt fittings, and align the clamping portions to properly attach the rods between the two portions. This requires a significant amount of time/effort, is subject to mis-installation (e.g., given the complexity) and, in cases where piping is not easily reachable, installation may be impractical, if not impossible. Thirdly, due to the type of materials used (e.g., steel) and the threaded type connections, the design is prone to corrosion and degradation, and due to the complexity, very difficult to service and replace. Finally, in the case were large-diameter type pipe is being restrained, the two-part clamping-type restraining systems becomes correspondingly heavier and requires more rods to secure the two piping segments together (e.g., even more complex). Therefore, there is a need to provide pipe restraining systems that do not rely on this flawed technology.

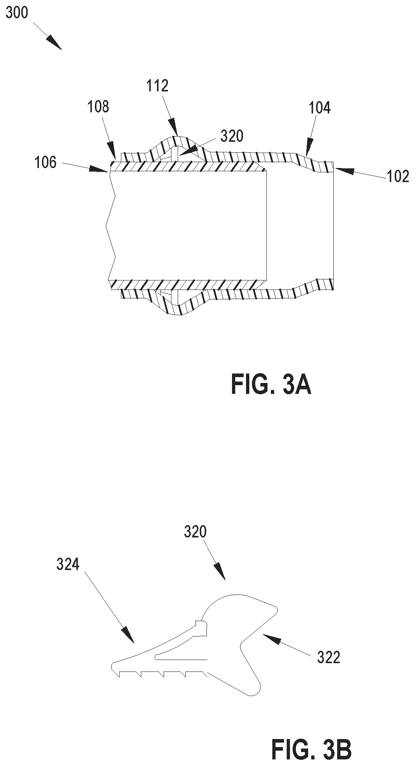

One alternative approach to the external two-part clamping-type restraint system is to internally restrain the bell and spigot ends of the two piping segments, such as illustrated in FIGS. 3A and 3B. FIG. 3A illustrates and internal piping restraint system 300, that includes internal restraining gasket 320. Internal restraining gasket 320, and as best illustrated in FIG. 3B, includes both a first seal portion 322 and a second restraining portion 324. Seal portion 322 functions similarly to seal 114 as discussed relating to FIG. 1, retaining the spigot end 108 of second pipe 106 within bell end 104 of first pipe 102 and preventing leaks from occurring. However, in this case, restraining gasket 320 also includes restraining portion 324. During installation, restraining portion 324 affixes itself to either, or both of, bell end 104 (e.g., within groove 112) and/or spigot end 108, such that first pipe 102 and second pipe 106 are physically coupled via restraining gasket 320 and restrained from movement/separating internally.

Importantly, this method of restraint avoids the numerous drawbacks of the external two-part clamping-type restraint system. Firstly, installation is significantly simplified, since the assembly of the piping segments occurs as it typically would, but for requiring slightly more force when pressing the spigot end into the bell, affixing the two piping segments together (e.g., no alignment requirements, no rods, etc.). Furthermore, since the internal restraining gasket 320 is internal to the pipe, there are no external corrosion/degradation concerns.

However, the internal restraining system also encounters drawbacks. Firstly, although the two piping segments are restrained from separation, high pressure water can still cause for the bell end of the pipe to separate leading to leaking and/or failure of the seal. Secondly, the sealing gasket is not necessarily installed at the manufacturing facility of the pipe. Therefore, on-site installation is often required, which may lead to the manufacture of the pipe voiding the associated pipe's warranty, since the manufacturer's shop-installed seal is not being used. Finally, pipes over 10" in diameter cannot pass ASTM F1674 pressure testing with any internal restraint gasket design presently known.

Accordingly, what is required is a reinforcement system that both prevents the pipe segments from separating, as well as maintains the seal between the bell and spigot end when the PVC piping experiences high pressure scenarios.

The present invention provides a pipe bell end reinforcing device that reinforces the bell portion of the pipe, such that a) the two pipe segments are restrained from movement, and b) the bell end is prohibited from expansion, such that water cannot leak around the seal and/or through the groove of the bell end of the pipe when a high-pressure scenario is encountered. This allows for PVC piping to meet the associated AWWA and ASTM standards, and particularly, for large bore (e.g., 10" or more diameter pipe) to be used for water supply piping.

The present pipe bell end reinforcing device resolves the issues associated with the existing two-part clamping-type restraint systems as well as the internal restraint. Here, the compressive/ expansion-resistive force reinforces and prevents the bell end from separating from the spigot under high pressure, which prevents leaking under such scenarios. Additionally, the pipe bell end reinforcing device is significantly less complex than the two-part clamping-type restraint systems, and as such, avoids the identified installation/service difficulties. Since the pipe bell end reinforcing device is external to the piping element, the manufacturers gasket can be utilized and avoid voiding the associated warranties, or alternatively, the pipe bell end reinforcing device can be used in combination with the internal restraint. Finally, the pipe bell end reinforcing device may coupled with an additional pipe stop, positioned about the outer circumference of the spigot end, provided additional support to the piping connection. Therefore, the present pipe bell end reinforcing device is a significant advancement over the present technologies.

### (I) Bell End Reinforcing Device

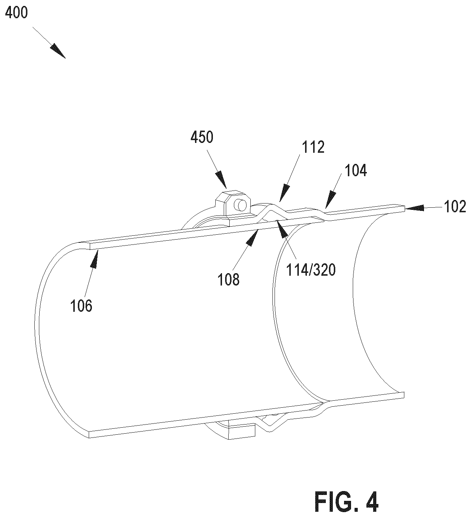

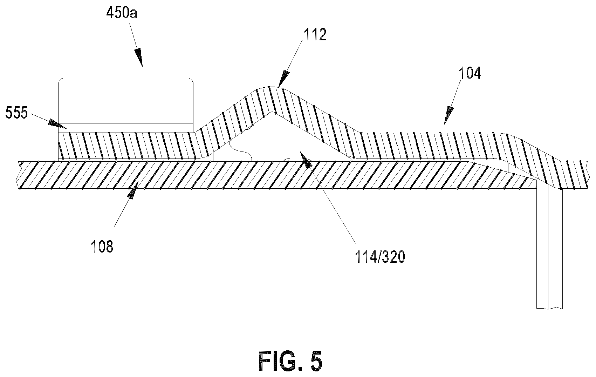

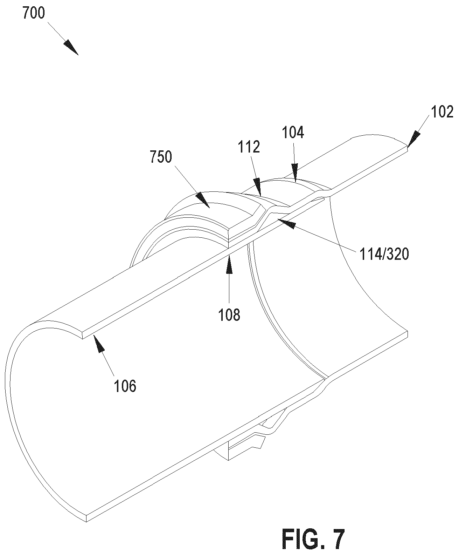

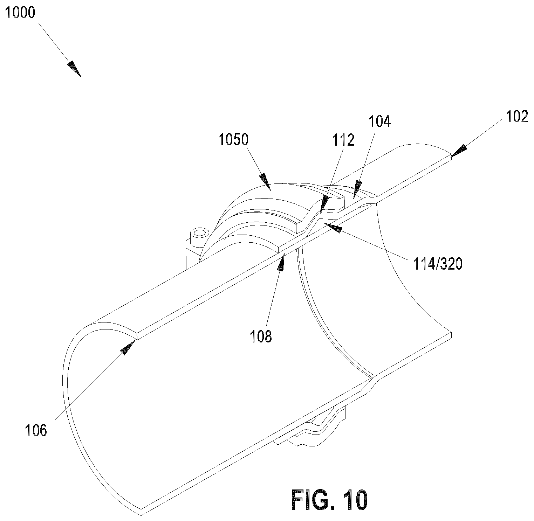

Here, each of FIGS. 4-12 illustrate embodiments of the pipe bell end reinforcing device. Specifically, FIGS. 4, 5, and 6 illustrate a first embodiment of the present pipe bell end reinforcing device, which may be used on smaller diameter and/or low pressure PVC pipes; FIGS. 7, 8, and 9 illustrate a second embodiment of the present pipe bell end reinforcing device, which may be used on medium diameter and/or moderate pressure PVC pipes; and FIGS. 10, 11, and 12 illustrate a third embodiment of the present pipe bell end reinforcing device, which may be used on large diameter and/or high pressure PVC pipes. Each of the first two (e.g., first and second) embodiments of the pipe bell end reinforcing device may be referred to as a "pipe jacket", while the third embodiment may be referred to as a "pipe saddle".

FIGS. 4, 5, and 6 illustrate a first embodiment of the pipe bell end reinforcing device, which may be referred to as bell end reinforcing device 450. Bell end reinforcing device 450 is designed to provide a minimal amount of reinforcement to the bell and spigot connection, such as what is required for relatively small piping (e.g., 4 inch and less diameter pipe) and/or relatively low-pressure PVC piping.

Here, bell end reinforcing device 450 is installed/positioned close to, or in some cases, at the distal end of the bell end 104 of pipe 102. During installation, a slight compressive force is provided by a physical coupling (e.g., screw, bolt with associate nut/washer, etc.) which collapses in and reduces the circumference of bell end reinforcing device 450 to an internal diameter substantially similar to the outer diameter of the bell end 104. Once high-pressure water is supplied within the fluid channel of pipes 102 and 106 (e.g., the pipes 102 and 106 are under diametral load), compressive force is generated by the fixed diameter of bell end reinforcing device 450 resisting the expansion of the bell end 104 of pipe 102, thereby structurally reinforcing the bell end 104. The compressive/ expansion-resistive force provided by bell end reinforcing device 450 firstly restrains first pipe 102 and second pipe 106 from movement (e.g., acts as a pipe restraint). The compressive/expansion-resistive force also bolsters the rigidity of the distal end of bell end 108, thus securing the position of seal 114 (which can be a restraining gasket 320) within groove 112 since the bell end 104 is prevented from expanding. Each feature, in combination, prevents leaks from occurring through fluid channel 120 during high pressure scenarios and/or separation of the pipes. Bell end reinforcing device 450 may optionally include gasket 555, positioned between the upper surface of bell end 108 and the bottom surface of bell end reinforcing device 450, which restrains (e.g., via friction) the movement of bell end reinforcing device 450 about bell end 108 (e.g., prevents slippage). Gasket 555 may also buffer /cushion the compressive force generated by bell end reinforcing device 450 which prevents the bell end 108 from stressing/cracking under diametral load. Gasket 555 also allows for tolerance variation in the external diameter of the pipe, given that PVC piping is inherently prone to outer diameter deviations, while maintain a uniform compressive/expansion-resistive force about the exterior circumference of bell end 104.

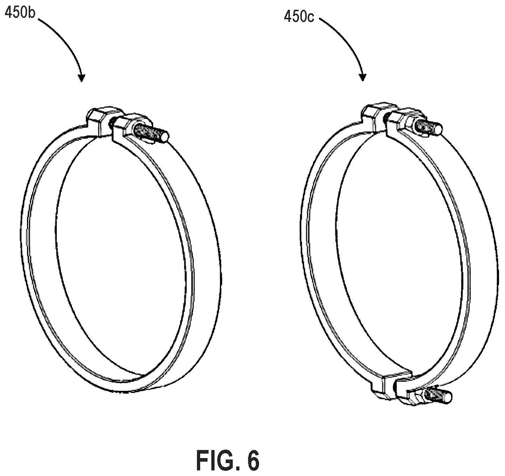

As illustrated in FIG. 6, bell end reinforcing device 450 may take a variety of physical forms, such as a single piece bell end reinforcing device 450b, a two-piece bell end reinforcing device 450c, or any number of suitable pieces, as will be described with further detail here. Additionally, although illustrated in specific geometric arrangements (e.g., cuboid/rectangular prism), including specific fasteners (bolts, nuts, etc.) bell end reinforcing device 450 may take any number of arrangements as best suited to the particular application. Therefore, the physical embodiments illustrated herein are non-limiting.

FIGS. 7, 8, and 9 illustrate a second embodiment of the pipe bell end reinforcing device, which may be referred to as bell end reinforcing device 750. Bell end reinforcing device 750 maybe substantially similar to bell end reinforcing device 450, but further designed to provide more robust support to the bell and spigot connection, such as what is required for medium diameter piping (e.g., greater than 4-inch, but less than 10-inch diameter pipe) and/or medium-pressure PVC piping.

Similar to bell end reinforcing device 450, bell end reinforcing device 750 also provides compressive/expansion-resistive force to the bell end 104 of first pipe 102, restraining first pipe 102 and second pipe 106 from movement (e.g., preventing separation) and bolstering the rigidity of the distal end of bell end 10 and securing the position of seal 114 (or 320), preventing leaks from occurring through fluid channel 120 during high pressure scenarios. Here, bell end reinforcing device 750 also includes a portion extending onto the distal raised surface of bell end 104, located superior to the groove 112. The additional support provides enhanced robustness over bell end reinforcing device 450, as the bell portion 104 is further supported/compressed as is required for moderate pressure/ medium diameter piping.

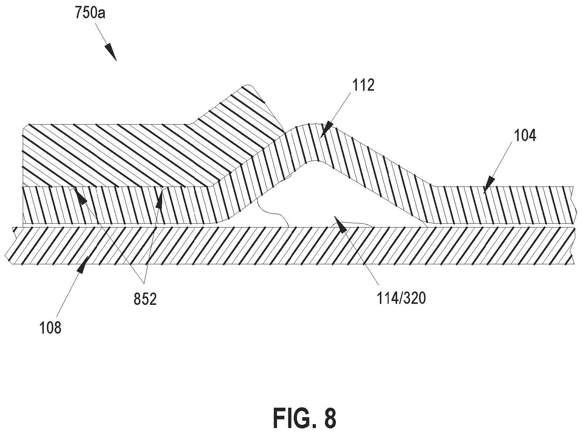

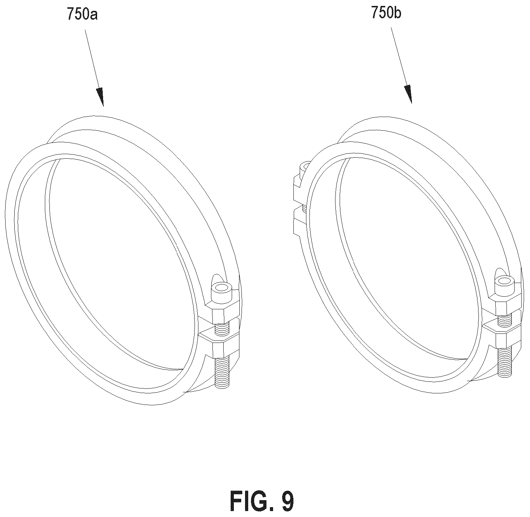

As best illustrated in FIG. 8, bell end reinforcing device 750 may also include one or more teeth 852, that, when the compressive force is supplied, bite into the outer surface of the bell end 104, physically coupling and securing bell end reinforcing device 750 to first pipe 102 thus preventing slippage. Although unillustrated, in an alternative arrangement, a gasket similar to gasket 555 may also be included to further buffer /cushion the compressive/expansion-resistive force of bell end reinforcing device 450 and prevent slippage. As illustrated in FIG. 9, bell end reinforcing device 750 may take a variety of physical forms, such as a single piece bell end reinforcing device 750b, a two-piece bell end reinforcing device 750c, or any number of suitable pieces. Finally, and similar to bell end reinforcing device 450, although illustrated in specific geometric arrangements (e.g., cuboid/rectangular prism), including specific fasteners (bolts, nuts, etc.) bell end reinforcing device 750 may take any number of arrangements as best suited to the particular application. Therefore, the physical embodiments illustrated herein are non-limiting.

FIGS. 10, 11 A/B/C/D/E, and 12 illustrate a third embodiment of the bell reinforcing device, which may be referred to as pipe saddle 1050. Pipe saddle 1050 is designed to provide the maximum amount of reinforcement to the bell and spigot connection, such as what is required for large diameter piping (e.g., 8 inches or more, and in some cases, 10 inches and greater) and/or high-pressure PVC piping.

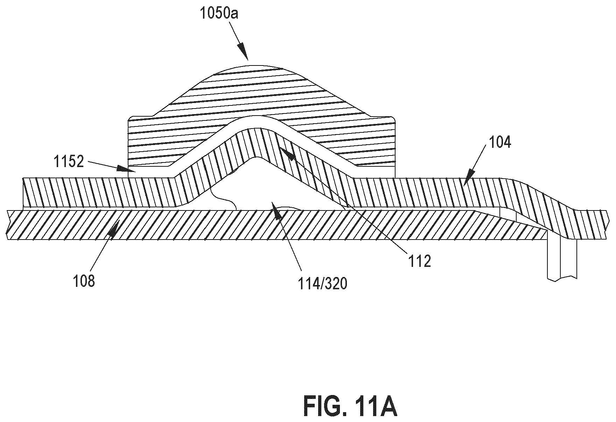

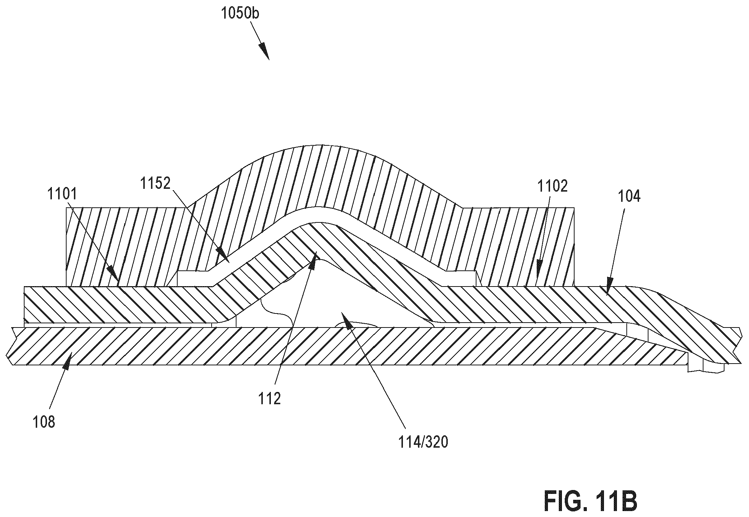

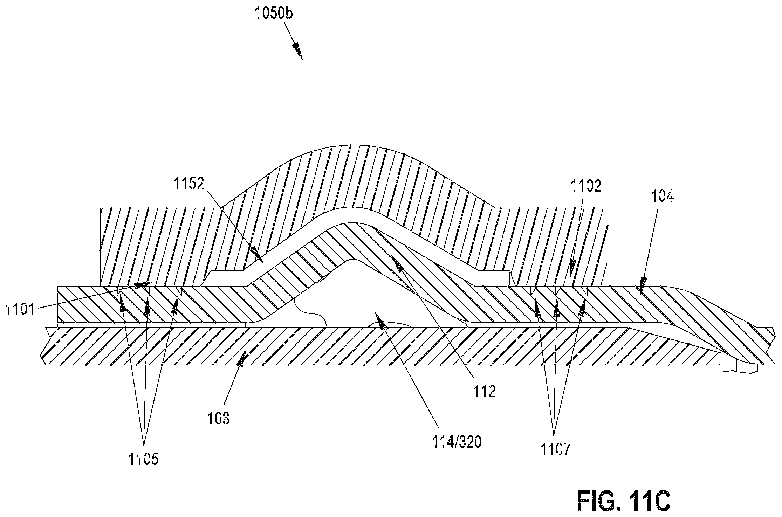

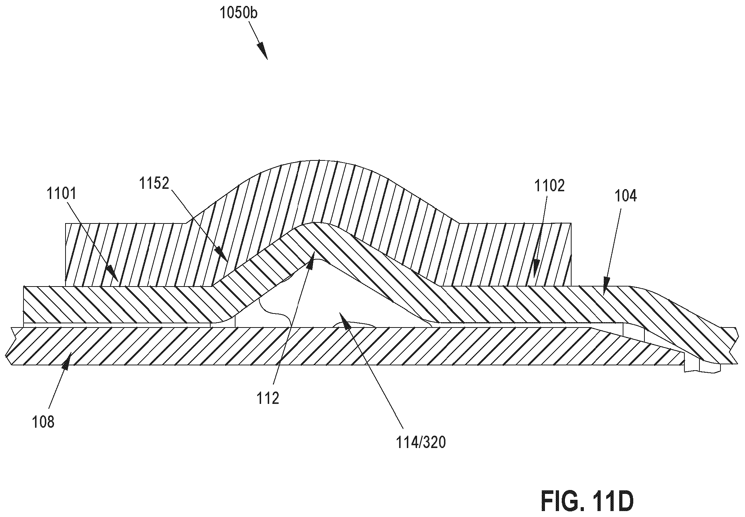

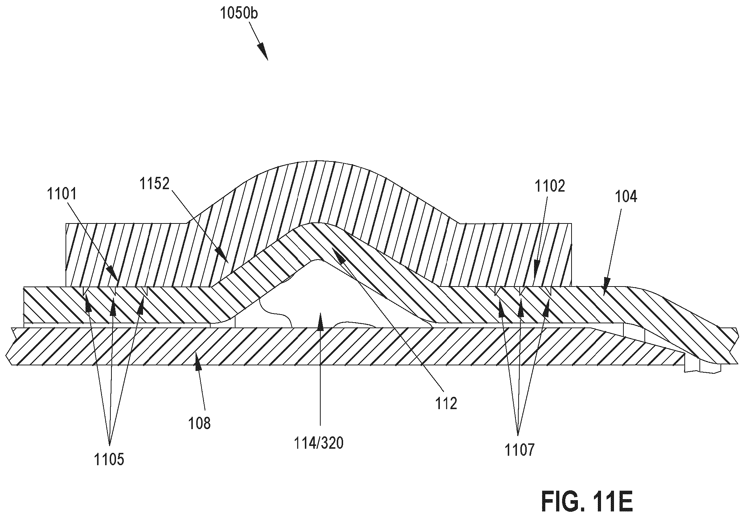

Here, pipe saddle 1050, which is substantially similar in design /functionality to the pipe jackets 450 and 750, is designed such that the entirety of both the distal and proximate raised surfaces of the bell end 108 superior to groove 112 are fully encapsulated, providing support to the entirety of the groove 112, and the corresponding maximum amount of support for the bell end of the piping connection. This design is specifically suited for high pressure and large diameter pipes that require the maximum amount of compressive force. As illustrated in figures 10, 11A, 11B, and 11C, and as with bell end reinforcing device 450, pipe saddle 1150 may include rubber gasket 1152, positioned between the upper surface of bell end 108 and the bottom surface of pipe saddle 1050, which also restrains the movement of pipe saddle 1050 about bell end 108 and also buffers/cushions the compressive force of pipe saddle 1050 which prevents the bell end 108 from stressing/cracking under load/accommodates pipe tolerances. Alternatively, as illustrated in figures 11D and 11E, pipe saddle 1150 may lack the rubber gasket 1152. As illustrated in each of figures 11C-E, pipe saddle 1050b may include extended portions 1101 and 1102, which extend laterally beyond that of pipe saddle 1050a, providing further contact and support for pipe saddle 1050 about bell end 104. As illustrated in each of figures 11B and 11C, rubber gasket 1152 may be fully encompassed by pipe saddle 1050, abutted by extended portions 1101 and 1102. However, as illustrated in FIG. 11A, full encompassment is not required.

As illustrated in each of figures 11C and E, pipe saddle 1050b may include one or more annular ridges 1105 and 1107. Here, annular ridges 1105 may be associated with extended portion 1101 of pipe saddle 1050b, and annular ridges 1107 may be associated with extended portion 1102 of pipe saddle 1050b. The annular ridges 1105 and/or 1107 may, under compression, engage and/or bite into the bell end 104 of first pipe 102, physically coupling and/or securing pipe stop pipe saddle 1050 and second pipe 102. Each ridge of ridges 1105 and/or 1107 may be directional, such that movement in prevented in either the same, or different longitudinal directions about first pipe 102. The foregoing engagement prevents relative axial movement of pipe saddle 1050, thus securing first pipe 102 to second pipe 106. Although illustrated as annular ridges in FIG 11, the disclosure is nonlimiting. Therefore, any variety of fixation means, such as teeth, ridges, barbes, and the like can be used to engage with and/or bite into the outer surface of bell end 104 of first pipe 102.

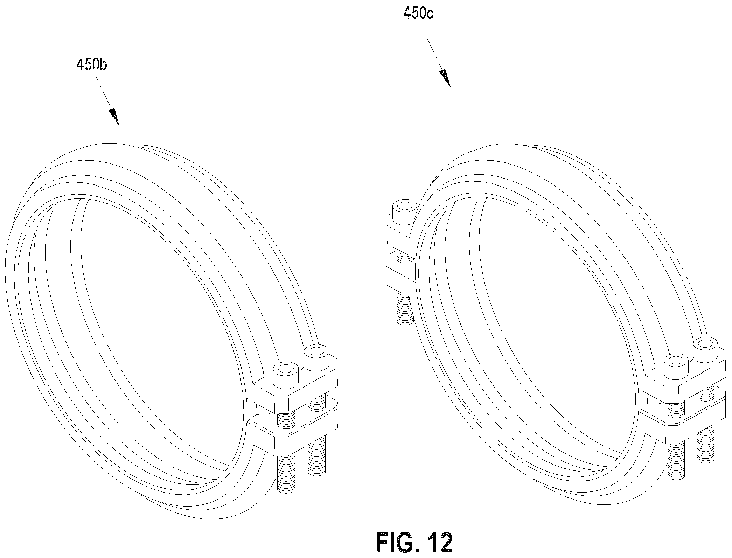

As illustrated in FIG. 12, pipe saddle 1050 may take a variety of physical forms, such as a single piece pipe saddle 1050b, a two-piece pipe saddle 1050c, or any number of suitable pieces. Additionally, although illustrated in specific geometric arrangements (e.g., cuboid/rectangular prism), including specific fasteners (bolts, nuts, etc.) pipe saddle 1050 may take any number of arrangements as best suited to the particular application. Therefore, the physical embodiments illustrated herein are non-limiting.

### (II) Bell End Reinforcing Device in Combination with a Pipe Stop:

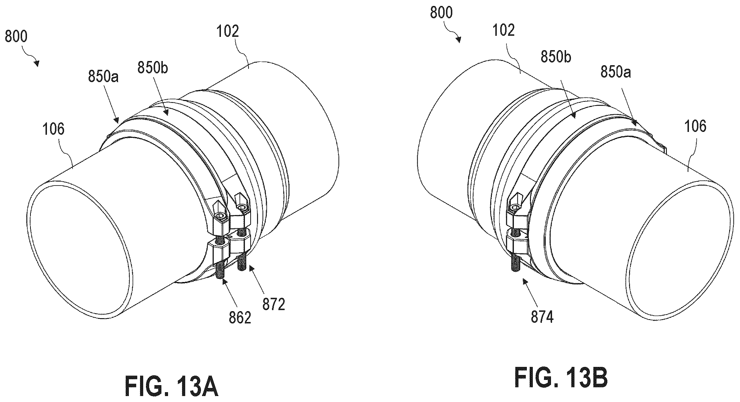

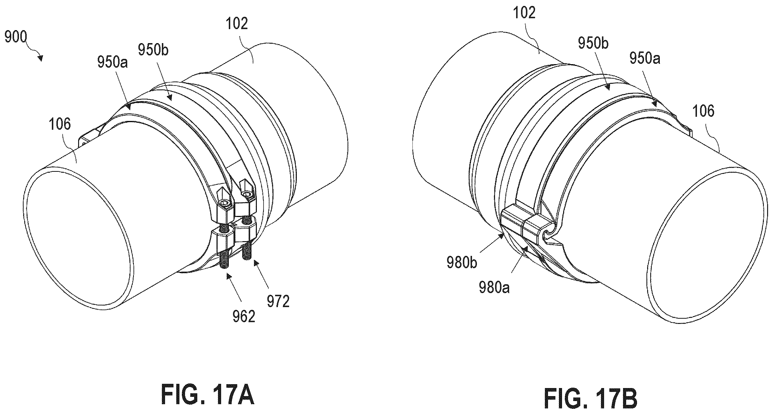

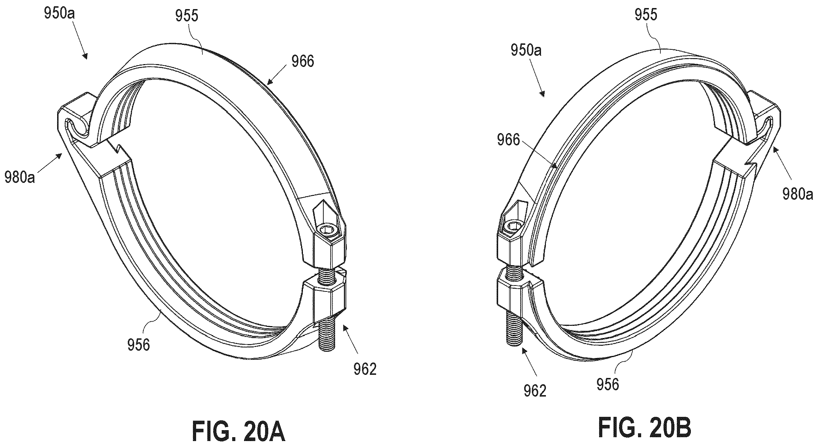

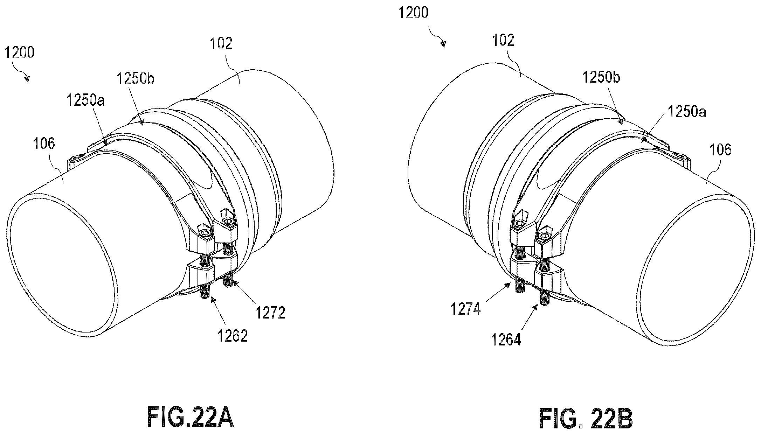

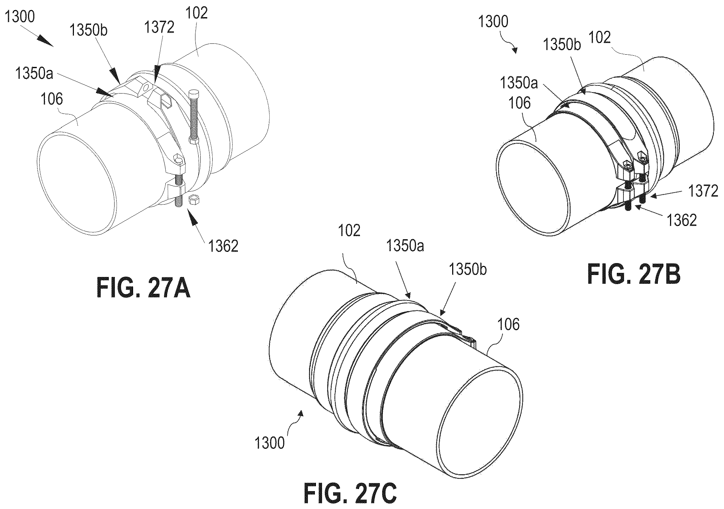

Each of Figures 13-32 illustrate additional arrangements of bell end reinforcing devices that may be used in combination with pipe stops to form locking piping arrangements. Specifically, FIGS. 13A-16B illustrate a first embodiment, FIGS. 17A-21B illustrate a second embodiment, FIGS. 22A-25B illustrate a third embodiment, and FIGS. 27A-31B illustrate a fourth embodiment of bell end reinforcing devices arranged in combination with pipe stops to form locking piping arrangements. FIG 3e illustrates substantially similar arrangements used in conjunction with pie fittings. Similar to the prior pipe bell end reinforcing devices, such locking piping arrangements may be used on larger diameter and/or high-pressure PVC pipe, and/or in combination with an internal restraining gasket 320 or seal 114, each described previously.

In a first embodiment, and as illustrated in FIGS. 13A, 13B, 14, 15A, 15B, 16A, and 16B, the locking piping arrangement comprises a pipe stop 850a and a bell end reinforcing device 850b.

Pipe stop 850a may be a single piece pipe stop configured to axially/laterally slide onto, and be affixed onto, spigot end 108 of second pipe 106. For instance, during installation, the single pipe stop 850a is axially slid across the outer circumference of second pipe 106, and thereafter, a slight compressive force is provided by a physical coupling 862 (e.g., screw, bolt with associate nut/washer, etc.), which collapses in and reduces the circumference of pipe stop 850a to an internal diameter substantially similar to the outer diameter of the second pipe 106. Pipe stop 850a may be installed at a defined distance from spigot end 108 along the length of second pipe 106, such that when second pipe 106 is inserted into bell end 104 of first pipe 102, pipe stop 850a meets bell end reinforcing device 850b (e.g., to be described with further detail below) preventing second pipe 106 from lateral/axial movement towards the anterior end of first pipe 102.

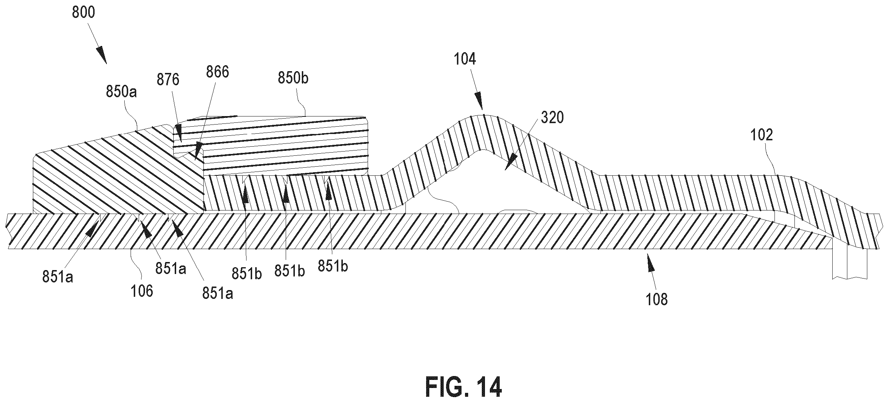

Bell end reinforcing device 850b comprises a first component 857 and a second component 858. Here, when second pipe 106 is inserted into first pipe 102, first component 857 may be placed/installed onto a top surface of first pipe 102 such that a portion of first component 857 overlaps with pipe stop 850a and creates a dove tail connection., to be described in further detail herein, with grooves 866/876, as shown in FIG. 14. First component 857 and second component 858 may be coupled together by a fastener 872/874 at either end of the first component 857 and second component 858. Fasteners 872/874 may be fastened to provide a compressive force, tightening bell end reinforcing device 850b around first pipe 102 (e.g. providing piping support to the bell end, as described in relation to FOG. 4-12 previously).

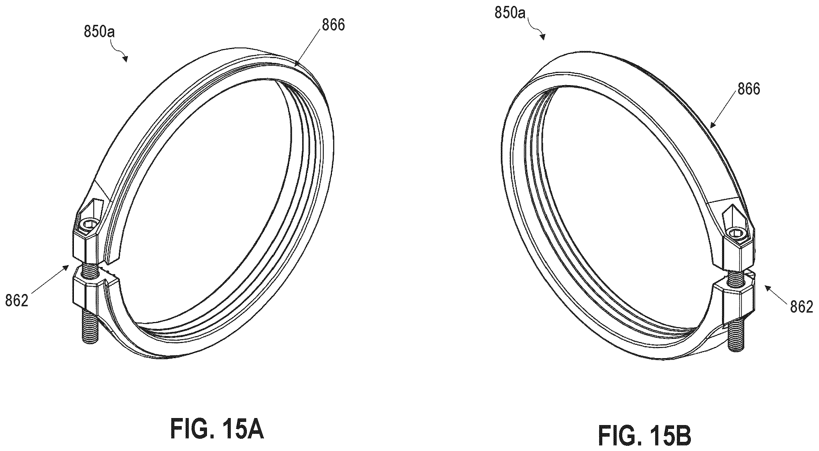

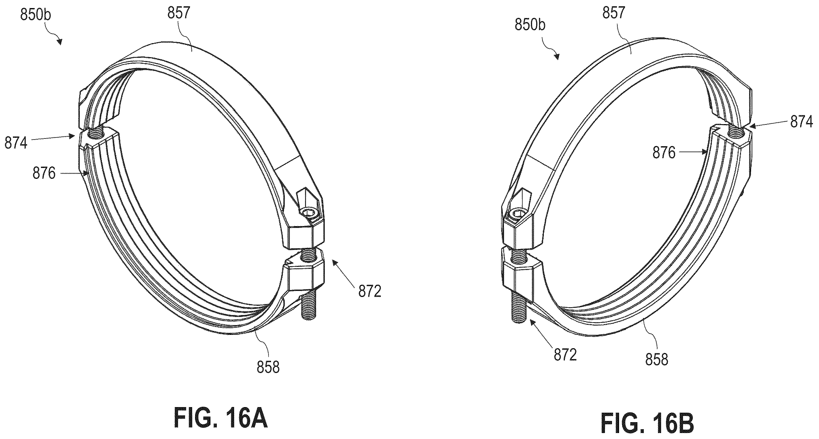

Pipe stop 850a may comprise a groove 866 (e.g., illustrated in FIGS. 15A and 15B) along an internal circumference of pipe stop 850a. Similarly, bell end reinforcing device 850b may further comprise a groove 876 (e.g., as further illustrated in FIGS. 16A and 16B) along an internal circumference of bell end reinforcing device 850b. Groove 866 is configured to fittingly interface with groove 876 to form a dovetail connection, as shown in FIG. 14. The dovetail connection prevents axial movement/separation of pipe stop 850a and bell end reinforcing device 850b, thus mechanically coupling the two devices. As best illustrated in FIG. 14, pipe stop 850a and bell end reinforcing device 850b optically may each include one or more annular ridges 851a and 851b which, under compression, engage and/or bite into the outer surface of spigot end 108 of second pipe 106 and bell end 104 of first pipe 102, respectively, physically coupling and/or securing pipe stop 850a and bell end reinforcing device 850b to second pipe 106 and first pipe 102, respectively. Each ridge of ridges 851a and/or 851b may be directional, such that movement in prevented in either the same, or different longitudinal directions about first pipe 102 and/or second pipe 106. The foregoing engagement prevents relative axial movement between first and second pipes 102 and 106, thus securing first pipe 102 to second pipe 106. Each ridge of ridges 851a and/or 851b may be directional, such that movement in prevented in either the same, or different longitudinal directions about first pipe 102 and/or second pipe 106. Although illustrated as annular ridges, the disclosure is nonlimiting. Therefore, any variety of fixation means, such as teeth, ridges, barbes, and the like can be used to engage with and/or bite into the outer surface of bell end 104 of first pipe 102 and/or spigot end 108 of second pipe 106.

In a second embodiment, and as illustrated in FIGS. 17A, 17B, 18, 19A, 19B, 20A, and 20B, the locking piping arrangement comprises pipe stop 950a and a bell end reinforcing device 950b.

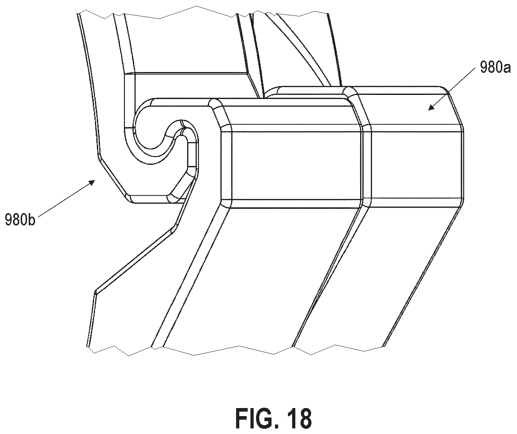

Pipe stop 950a may be a two-piece jacket designed to hinge around the outer circumference of second pipe 106 at hinge 980a. Here, pipe stop 950a may comprise a first component 955 and a second component 956. First component 955 may be placed/installed onto a top surface of second pipe 106 at a distance from spigot end 108 along the length of second pipe 106. Second component 956 may be coupled to first component 955 by a hinge connection 980a, best shown in FIG. 18, wherein a flange of first component 955 couples with a flange of second component 956, forming a hinged connection. Specifically, during installation, second component 956 may be rotated around a bottom surface of second pipe 106 such that a distal end of second component 956 meets a distal end of first component 955 (e.g., swung about the hinge). Here, and as described previously, fastener 962 may couple the distal ends of first component 955 and second component 956 together. Thereafter, a slight compressive force is provided by a physical coupling 962 (e.g., screw, bolt with associate nut/washer, etc.) which collapses in and reduces the circumference of pipe stop 950a to an internal diameter substantially similar to the outer diameter of the second pipe 106. Similar to pipe stop 850a, pipe stop 950a may be installed such that when second pipe 106 is inserted into bell end 104 of first pipe 102, bell end 104 meets bell end reinforcing device 950a, restraining second pipe 106's axial/lateral movement within first pipe 102.

Bell end reinforcing device 950b may be a two-piece jacket designed to hinge around the circumference of second pipe 106 at hinge 980b. Bell end reinforcing device 950b may comprise a first component 957 and a second component 958. Here, once second pipe 106 is inserted into first pipe 102, first component 957 may be placed/installed onto a top surface of first pipe 102 such that a portion of first component 957 overlaps with first component 955 and creates a dove tail connection with grooves 966/976. Second component 958 may be coupled to first component 957 by a hinge connection 980b, as best shown in FIG. 18, wherein a flange of first component 957 couples with a flange of second component 958. The hinged second component 958 may be rotated around a bottom surface of first pipe 102 such that a distal end of second component 958 meets a distal end of first component 957. A fastener 972 may couple the distal ends of first component 957 and second component 958 together. To fully restrain and seal the bell end, and once the dove tail connection has been made, at least one fastener 872, 874 may be fastened to provide a compressive force, tightening bell end reinforcing device 850b around first pipe 102.

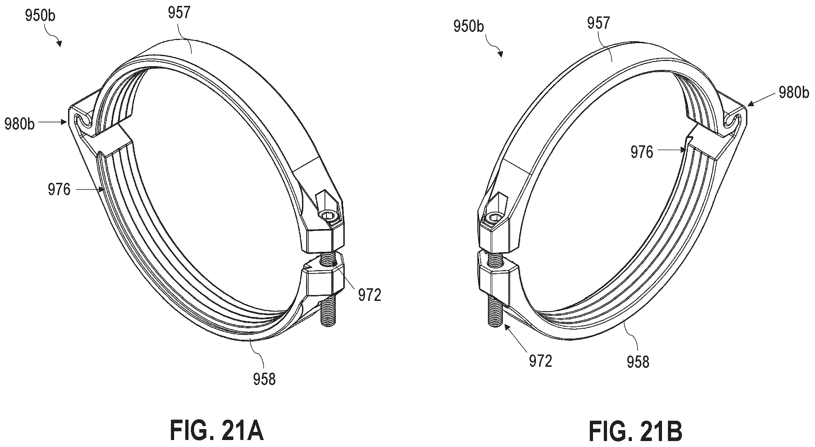

Similar to pipe stop 850a, pipe stop 950a may further comprise a groove 966 (FIGS. 21A and 21B) along an internal circumference of pipe stop 950a. Similarly, bell end reinforcing device 950b may further comprise a groove 976 (FIGS. 22A and 22B) along an internal circumference of bell end reinforcing device 920b.

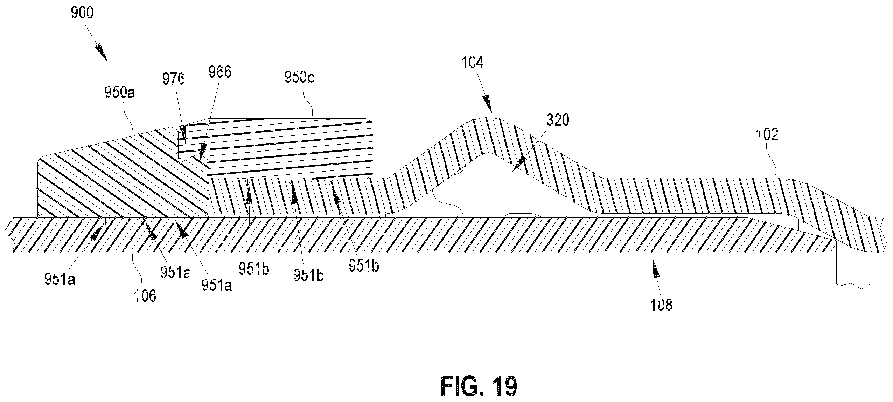

Groove 966 is configured to match up with groove 976 to form a dovetail connection, as shown in FIG. 19, and as described with reference to figs. 13 through 16 discussed previously.

Similar to pipe stop 850a and bell end reinforcing device 850b, and as best illustrated in FIG. 19, pipe stop 950a and bell end reinforcing device 950b may each include one or more annular ridges 951a, 951b, that, when the compressive force is supplied, bite into the outer circumferential surface of spigot end 108 of second pipe 106 and bell end 104 of first pipe 102, respectively, physically coupling and securing pipe stop 950a and bell end reinforcing device 950b to second pipe 106 and first pipe 10, thus preventing relative axial movement of first pipe 102 and second pipe 106. Each engagement prevents relative axial movement between first and second pipes 102 and 106, thus securing first pipe 102 to second pipe 106. Each ridge of ridges 951a and/or 951b may be directional, such that movement in prevented in either the same, or different longitudinal direction about first pipe 102 and/or second pipe 106.

In a third embodiment, and as illustrated in FIGS. 22A, 22B, 23A, 23B, 23C, 23D, 23E, 23F, 24A, 24B, 25A, and 25B, the locking piping arrangement comprises pipe stop 1250a and a bell end reinforcing device 1250b.

Here, pipe stop 1250a may be substantially similar to pipe stop 850a, except arranged in two pieces comprising a first component 1255 and a second component 1256 which couple together by a fastener 1262/ 1264 at either end of the first component 1255 and second component 1256. First component 1255 and second component 1256 of pipe stop 1250a may be secured to the spigot end 108 of second pipe 106.

During installation, a slight compressive force is provided by each physical coupling 1262/1264 (e.g., screw, bolt with associate nut/washer, etc.) which collapses in and reduces the circumference of pipe stop 1250a to an internal diameter substantially similar to the outer diameter of the second pipe 106. Pipe stop 850a may be installed at a defined distance from spigot end 108 along the length of second pipe 106, such that when second pipe 106 is inserted into bell end 104 of first pipe 102, pipe stop 1250a meets bell end reinforcing device 1250b, preventing second pipe 106 from lateral/axial movement towards the anterior end of first pipe 102.

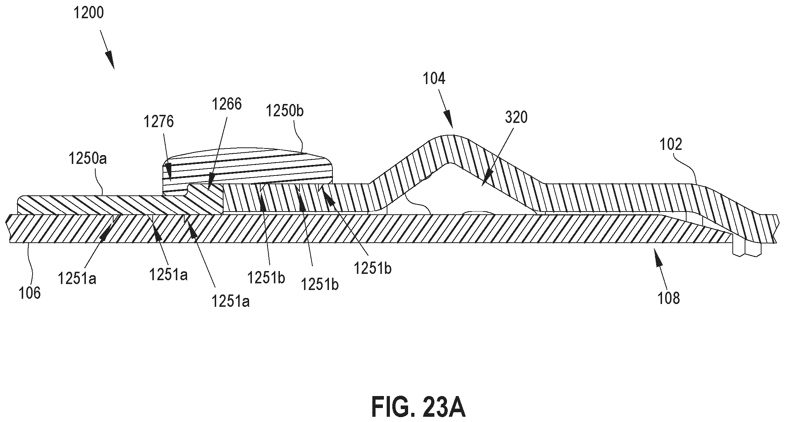

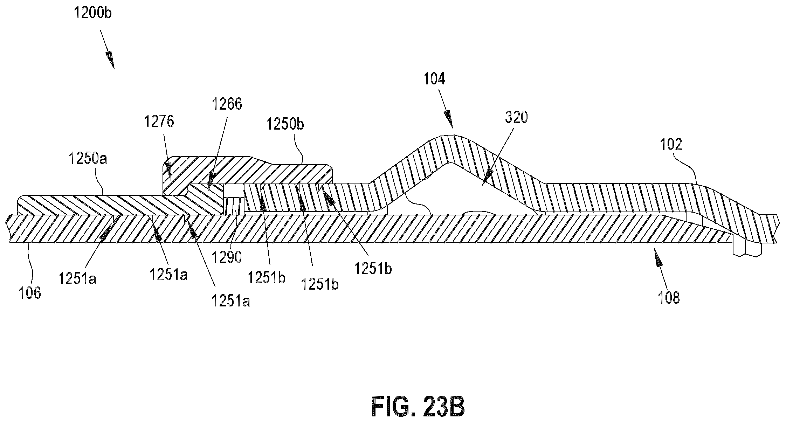

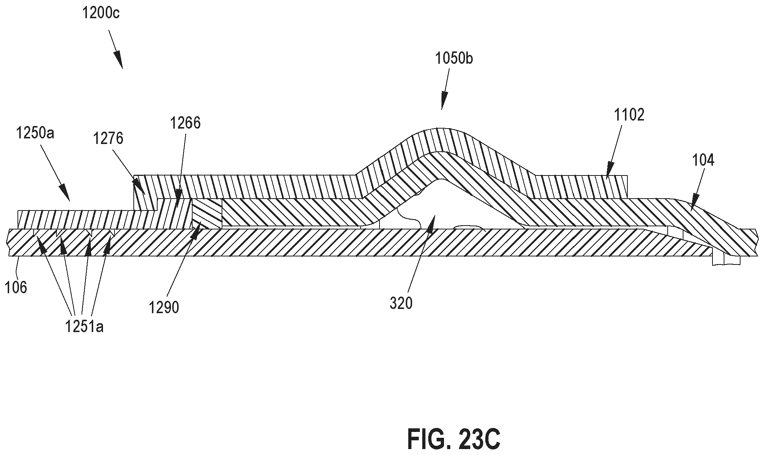

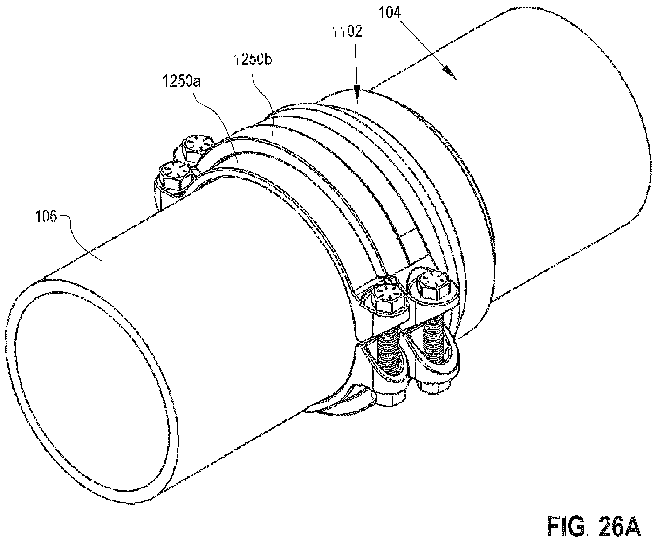

Bell end reinforcing device 1250b may be substantially similar to bell end reinforcing device 850. Bell end reinforcing device 1250b may comprise a first component 1257 and a second component 1258. Once second pipe 106 is inserted into first pipe 102, first component 1257 may be placed/installed onto a top surface of first pipe 102 such that a portion of first component 1257 overlaps with first component 1255 and creates the square connection with grooves 1266/1276. Additionally, and as illustrated in each of Figures 23C-23F, and 26, and similar to FIG. 11B-E, bell end reinforcing device 1250b may include extended portion 1102, which extends laterally beyond that of bell end reinforcing device 1250b in FIG. 23A/23B, fully encompassing bell portion 104. Such extended portions of bell end reinforcing device 1250b provides further support and reinforcement for bell end 104, by extending over the bell and towards portions of bell end 104 opposite that of groove 1276.

Furthermore, as illustrated in FIG. 23B-23F, an expansion gasket 1290 may occupy a void between groove 1266 of pipe stop 1250a and bell end 104. Expansion gasket 1290 allows for a seal to be maintained between the pipe stop 1250a and bell end 104 under different axial and/or radial stresses, such as expansion, compression, rotation, etc. Expansion gasket 1290 also buffers compressive forces that may damage pipe stop 1250b and/or bell end 104, to preventing deformation and potential cracking or breaking of either component.

First component 1257 and second component 1258 may be coupled together by a fastener 1272/ 1274 at either end of the first component 1257 and second component 1258. To fully restrain and seal the bell end, once the square connection has been made, the fasteners 1272, 1274 may be fastened to provide a compressive force, tightening bell end reinforcing device 1250b around first pipe 102.

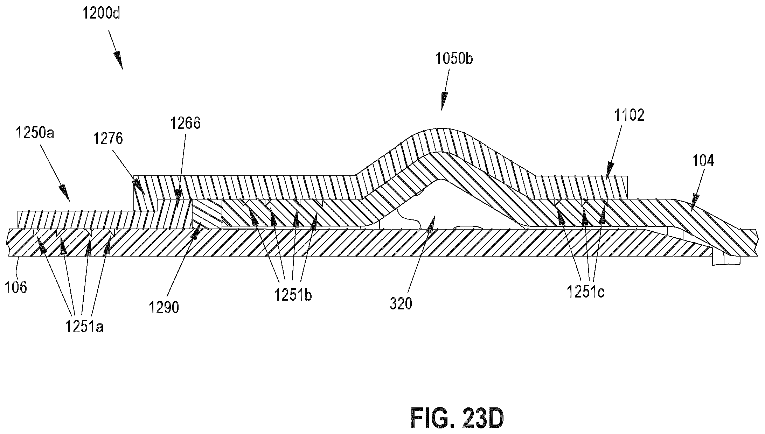

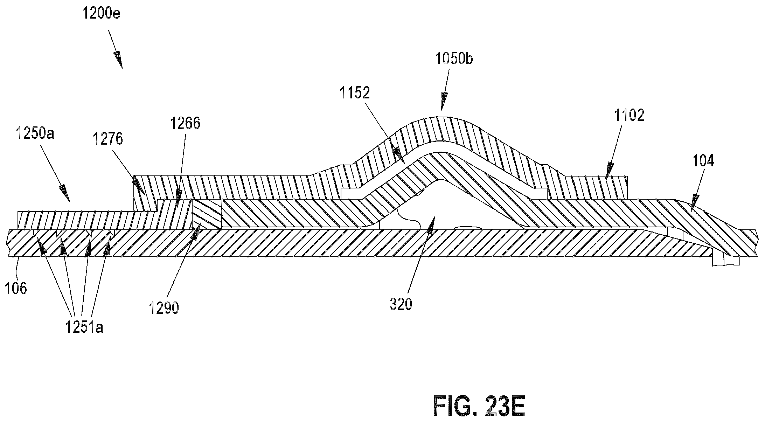

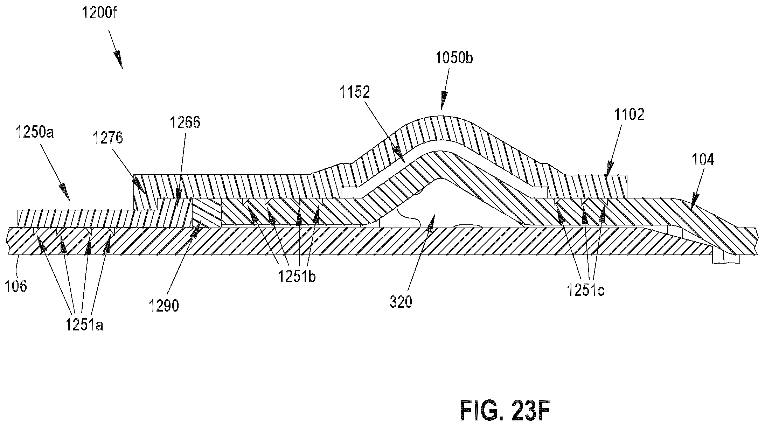

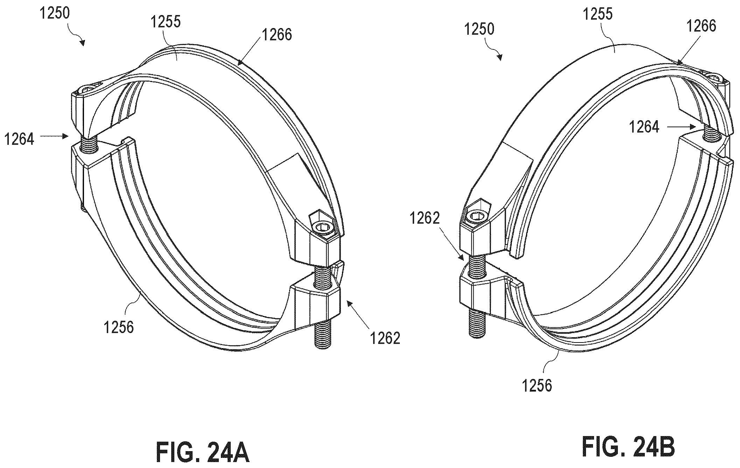

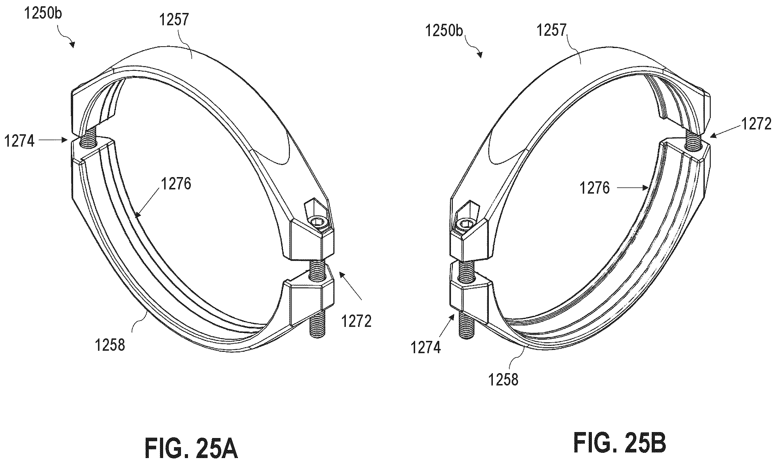

Pipe stop 1250a may further comprise a groove 1266 (FIGS. 24A and 24B) along an internal circumference of pipe stop 1250a. Similarly, bell end reinforcing device 1250b may further comprise a groove 1276 (FIGS. 25A and 25B) along an internal circumference of bell end reinforcing device 1250b. Groove 1266 is configured to interface with groove 1276 to form a connection, such as a square connection, as shown in FIG. 23. Pipe stop 1250a, and bell end reinforcing device 1250b may each include one or more annular ridges 1251a, and 1251b and/or 1251c, respectively, which, under compression, engage and/or bite into the outer surface of spigot end 108 of second pipe 106 and bell end 104 of first pipe 102, respectively, physically coupling and/or securing pipe stop 1250a and bell end reinforcing device 1250b to second pipe 106 and first pipe 102, respectively. For instance, as illustrated in FIG. 23A-F, pipe stop 1250a may include one of more annular ridges 1251a. As illustrated in FIGs 23A, 23B, 23D, and 23F, bell end reinforcing device 1250b may include one or more annular ridges 1250b and/or 1250c. In each of the foregoing cases, each annular ridges 1251 may be directionalized in the same or different directions.

As illustrated in FIGS. 23D and 23F, bell end reinforcing device 1250b may include one or more annular ridges 1251c, which may be positioned at a distal end of bell end reinforcing device 1250b relative to groove 1276, which future retrains the movement of portion 1102 of bell end reinforcing device 1250b However, as illustrated in each of Figures 23 C and 23 E, the annular ridges annular ridges 1251b and/or 1251d are not required. In each of the foregoing cases, annular ridges 1251 prevents relative axial movement between first and second pipes 102 and 106, thus securing first pipe 102 to second pipe 106. Each ridge of ridges 1251a and/or 1251b may be directional, such that movement in prevented in either the same, or different longitudinal directions about first pipe 102 and/or second pipe 106.

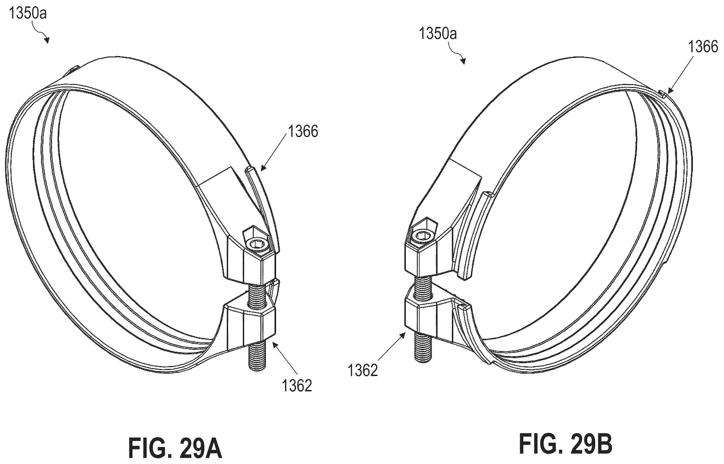

In a fourth embodiment, as illustrated in FIGS. 27A, 27B, 27C, 28A, 28B, 29A, 29B, 30A, and 30B, the locking piping arrangement comprises pipe stop 1350a and bell end reinforcing device 1350b. Pipe stop 1350a may be a one-piece, as shown in FIGS. 29A and 29B, two-pieces, or any number of suitable pieces/components as will be described with further detail herein. Pipe stop 1350a may be designed to axially move/slide onto spigot end 108 of second pipe 106 prior to insertion of second pipe 106 into first pipe 102. During installation, a slight compressive force is provided by a physical coupling 1362 (e.g., screw, bolt with associate nut/washer, etc.) which collapses in and reduces the circumference of pipe stop 1350a to an internal diameter substantially similar to the outer diameter of the second pipe 106. Pipe stop 1350a may be installed at a defined distance from spigot end 108 along the length of second pipe 106, such that when second pipe 106 is inserted into bell end 104 of first pipe 102, pipe stop 1350a meets bell end reinforcing device 1350b, preventing second pipe 106 from lateral/axial movement towards the anterior end of first pipe 102.

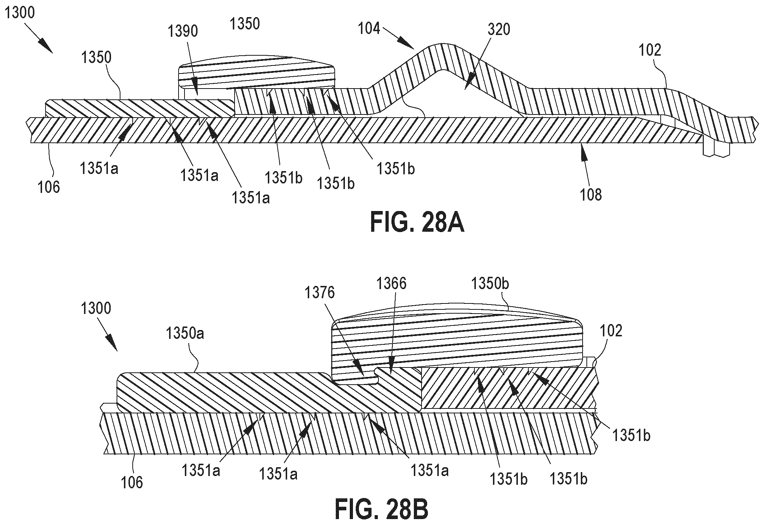

Pipe stop 1350a may further comprise a groove 1366 (FIGS. 29A and 29B) along at least part of an internal circumference of pipe stop 1350a. The internal surface of pipe stop 1350a comprises a smooth surface not including groove 1366. Similarly, bell end reinforcing device 1350b may further comprise a groove 1376 (FIGS. 16A and 16B) along at least part of an internal circumference of bell end reinforcing device 1350b. The internal surface of bell end reinforcing device 1350b comprises a smooth surface not including groove 1376. Groove 1366 is configured to match up with groove 1376 to form a bayonet-type connection, as shown in FIGS. 28A and 28B and further discussed below.

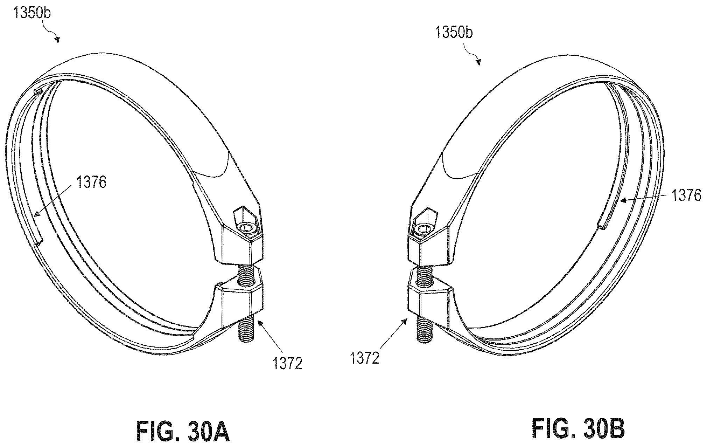

Bell end reinforcing device 1350b may be a one-piece, as shown in FIGS. 30A and 30B, a two-piece jacket, or any number of suitable pieces/components. Bell end reinforcing device 1350b may be designed to slide and/or move axially onto bell end 104 of first pipe 102 prior to insertion of second pipe 106 into first pipe 102. Once second pipe 106 has been inserted into first pipe 102, bell end reinforcing device 1350b may be connected with pipe stop 1350a such that a portion of bell end reinforcing device 1350b overlaps with pipe stop 1350a. As shown in FIGS. 27A and 28A, when bell end reinforcing device 1350b is initially installed overlapping with pipe stop 1350a, the grooves 1366, 1376 of bell end reinforcing device 1350b and pipe stop 1350a do not line up, creating an open space 1390 between bell end reinforcing device 1350b and pipe stop 1350a. To form the bayonet connection, bell end reinforcing device 1350b is axially rotated such that groove 1376 lines up with groove 1366, as illustrated in FIG. 28B. Once the bayonet connection is formed, fastener 1372 is tightened. Fastener 1372 may provide a compressive force, tightening bell end reinforcing device 1350b around first pipe 102.

Similar to pipe stop 850a and bell end reinforcing device 805b, and as best illustrated in FIG. 28, pipe stop 1350a and bell end reinforcing device 1350b may each include one or more annular ridges 1351a, 1351b, that, when the compressive force is supplied, bite into the outer circumferential surface of spigot end 108 of second pipe 106 and bell end 104 of first pipe 102, respectively, physically coupling and securing pipe stop 1350a and bell end reinforcing device 1350b to second pipe 106 and first pipe 10, thus preventing relative axial movement of first pipe 102 and second pipe 106. Each engagement prevents relative axial movement between first and second pipes 102 and 106, thus securing first pipe 102 to second pipe 106. Each ridge of ridges 1351a and/or 1351b may be directional, such that movement in prevented in either the same, or different longitudinal direction about first pipe 102 and/or second pipe 106.

Although described in relation to both a pipe stop and a bell end reinforcing device, the disclose is nonlimiting. For instance, and as described with reference to FIGs 4-12, the bell end reinforcing device may be used to restrain the spigot end within the bell end of the piping system alone (e.g., without a pipe stop). Similarly, although not illustrated, the pipe stop may be used without a bell end reinforcing device. Here, the pipe stop may be installed about the outer circumference of the spigot end, and once the spigot end is inserted into the bell end at a given distance, the pipe abuts the bell of the bell end, limiting the movement of the spigot end into the bell end (e.g., "stopping" the pipes movement).

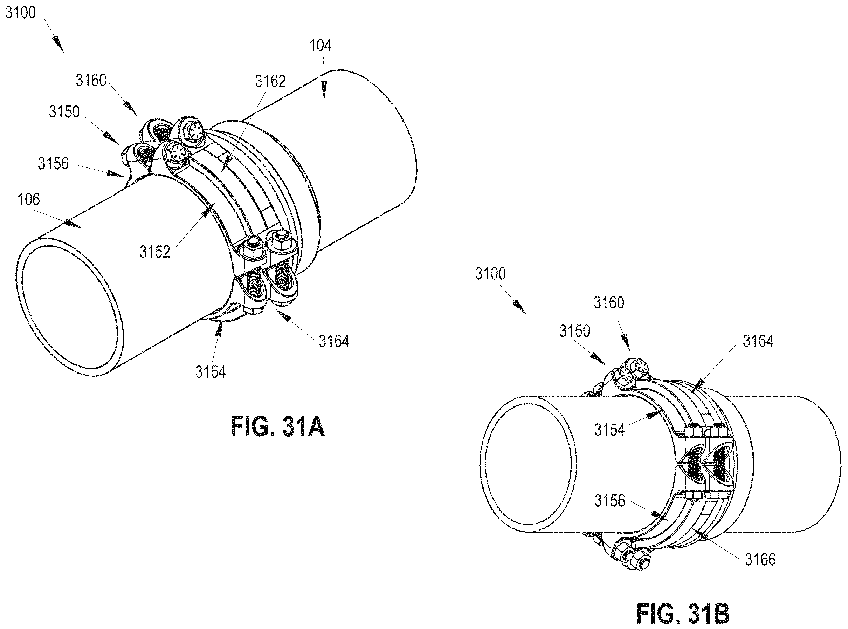

Furthermore, and as described previously, any variation of the ell end reinforcing device(s), pipe saddle(s), and/or pipe stop(s) may comprise any suitable number of pieces/components. For instance, FIG. 31A and 31B illustrate piping system 3100, including each of pipe stop 3150 and bell end reinforcing device 3160. Each of pipe stop 3150 and bell end reinforcing device 3160 may be the same as, or substantially similar to, any of the foregoing embodiments or pipe stop and/or bell end reinforcing devices as described with reference to any prior figure (e.g., FIGs 4-29). Additionally, although illustrated as including both pipe stop 3150 and bell end reinforcing device 3160, in some cases, only bell end reinforcing device 3160 may be present. As illustrated, pipe stop 3150 includes three sections, first section 3152, second section 3154, and third section 3156 which are each secured to one another by a physical coupling (e.g., screw, bolt with associate nut/washer, etc.), that, in conjunction, radially collapse the diameter of pipe stop 3150 as described previously. Similarly, bell end reinforcing device 3160 includes first section 3162, second section 3164, and third section 3166 which are each secured to one another by a physical coupling (e.g., screw, bolt with associate nut/washer, etc.), that, in conjunction, radially collapse the diameter of bell end reinforcing device 3160 as described previously. Therefore, each of pipe stop 3150 and bell end reinforcing device 3160 may be referred to as three-part devices that act in conjunction substantially similarly to two-part devices as described previously (e.g., 1250a and 1250b). Here, by using three parts, rather than two, larger diameter piping can be accommodated. For instance, when using pipe in the 24" and above inner diameter (ID) range, such as 24 inch to 60 inch, 36 inch to 60 inch, or larger than 60 inch ID pipe, three or more components may be used. However, the disclosure is nonlimiting. Meaning that any number or sections (e.g., four section, five section, etc.) may be used, as based upon the application/use of the piping system.

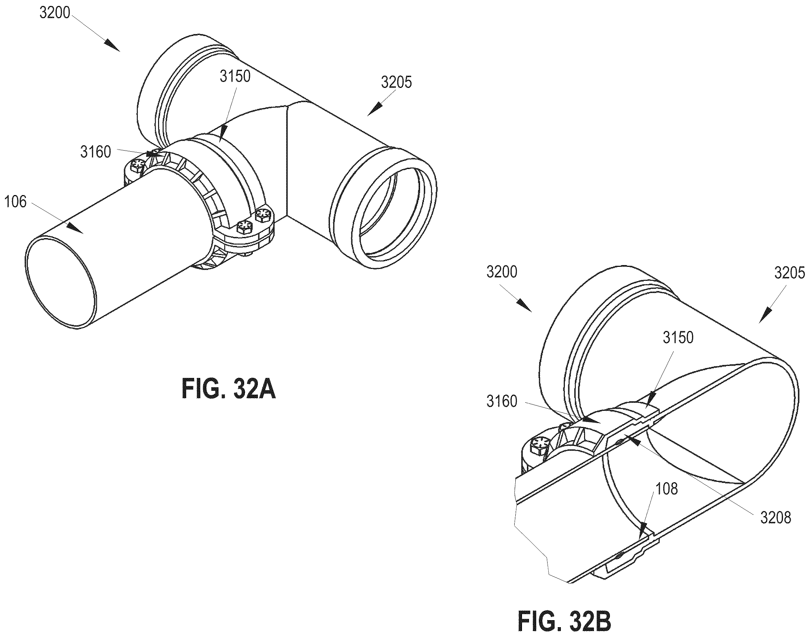

Furthermore, although illustrated and discussed as relating to two strait sections of piping, the foregoing embodiments equally apply to pipe fittings. For instance, and as illustrated in FIG. 32, piping system 3200 includes each of pipe 106 and pipe fitting 3205. As described previously, the spigot end 108 of pipe 106 is inserted into bell end 104 of pipe 102. Here, pipe fitting 3200 includes a bell potion 3208 where spigot end 108 of pipe 106 is inserted and similarly retained within bell portion 3208. Piping system 3200 includes pipe stop 3150 and bell end reinforcing device 3160. Each of pipe stop 3150 and/or bell end reinforcing device 3160 may include any of the foregoing components and/or features of any bell end reinforcing device(s), pipe saddle(s), and/or pipe stop(s) as described previously, and as such, the embodiment illustrated in FIG. 32 is but one of many alternatives. Accordingly, any bell end reinforcing device(s), pipe saddle(s), and/or pipe stop(s) described herein may accommodated a pipe fitting, rather than a second pipe 106. Furthermore, although illustrated as a T-type fitting, the disclosure is nonlimiting such that any pipe fitting, such as such as piping elbows, tees, reducers, couplings, crosses, valves, drains, adapters, etc. can be accommodated in the present design.

Although described as relating to PVC piping, the above disclosure is nonlimiting. Here, any of the foregoing bell end reinforcing device(s), pipe saddle(s), and/or pipe stop(s) may be formed from any suitable material of construction, as necessary/desired for the particular application, such as metallic materials and alloys including steel, stainless steel, and ductile iron, plastics and plastic-like materials PVC-U (unplasticized), PVC-O (oriented), CPVC (Chlorinated Polyvinyl Chloride), polyethylene (e.g., High Density Polyethylene (HDPE)), Cross-linked Polyethylene (PEX), composites, and the like. Additionally, each of embodiment of the bell end reinforcing device(s), pipe saddle(s), and/or pipe stop(s), although unillustrated, may be attached to first pipe 102 via suitable means, such as adhesives including mastic. Each of embodiment of the bell end reinforcing device(s), pipe saddle(s), and/or pipe stop(s) may be installed prior to installation, such as at the manufacturing facility of the PVC pipe or may be installed in the field. Finally, although described in relation to PVC pipe, the disclosure is nonlimiting. Accordingly, any type of bell and spigot-type piping material may be utilized, such as PVC-U (unplasticized), PVC-O (oriented), CPVC (Chlorinated Polyvinyl Chloride), polyethylene (e.g., High Density Polyethylene (HDPE)), Cross-linked Polyethylene (PEX), and the like.

### ASPECTS

Aspect 1 is a pipe system comprising: a first pipe comprising a bell end and a groove formed in the bell end, a gasket positioned within the groove; a second pipe comprising a spigot end, the spigot end position within the bell end of the first pipe and in contact with the gasket; and a bell end reinforcing device positioned external to at least a portion of the bell end of the first pipe, the bell end reinforcing device providing structural reinforcement to an exterior surface of the bell end.

Aspect 2 is the pipe system of Aspect 1, wherein the bell end reinforcing device provides structural reinforcement to the exterior surface via external compression.

Aspect 3 is the pipe system of either of Aspects 1 or 2, wherein the first pipe and the second pipe comprise PVC.

Aspect 4 is the pipe system of any one of Aspects 1 through 3, wherein the bell end reinforcing device is positioned at the distal end of the bell end and does not extend over a portion superior to the groove.

Aspect 5 is the pipe system of any one of Aspects 1 through 4, wherein the bell end reinforcing device is positioned at the distal end of the bell end and extends over a portion of the bell end superior to the groove.

Aspect 6 is the pipe system of any one of Aspects 1 through 5, wherein the bell end reinforcing device encompasses substantially all of the portion of the bell end superior to the groove.

Aspect 7 is the pipe system of any one of Aspects 1 through 6, wherein the bell end reinforcing device encompasses all of the portion of the bell end superior to the groove, and further extends over a portion of the first pipe distal the bell end.

Aspect 8 is the pipe system of any one of Aspects 1 through 7, wherein the bell end reinforcing device is coupled to the bell end by one or more annular ridges positioned about the inner surface of the bell end reinforcing device.

Aspect 9 is the pipe system of any one of Aspects 1 through 8, wherein the bell end reinforcing device encompasses a gasket positioned within the bell end reinforcing device.

Aspect 10 is the pipe system of any one of Aspects 1 through 9, further comprising a pipe stop positioned external to at least a portion of the spigot end of the first pipe, the pipe stop mechanically interfacing with the bell end reinforcing device to inhibit relative axial movement between the first pipe and the second pipe.

Aspect 11 is the pipe system of any one of Aspects 1 through 10, wherein the pipe stop is coupled to the spigot end by one or more annular ridges positioned about the inner surface of the pipe stop.

Aspect 12 is the pipe system of any one of Aspects 1 through 11, wherein the bell end reinforcing device is coupled to the bell end by one or more annular ridges positioned about the inner surface of the bell end reinforcing device.

Aspect 13 is the pipe system of any one of Aspects 1 through 12, wherein the pipe stop and/or bell end reinforcing device comprise a single component.

Aspect 14 is the pipe system of any one of Aspects 1 through 13, wherein the pipe stop and/or bell end reinforcing device comprise two of more components.

Aspect 15 is the pipe system of any one of Aspects 1 through 14, further comprising an expansion gasket positioned at the mechanical interface between the pipe stop and the bell end reinforcing device.

Aspect 16 is a pipe system, comprising: a first pipe having a spigot end coupled to an external pipe stop; and a second pipe having a bell end and an internal gasket, the second pipe coupled to a bell end reinforcing device, wherein: the spigot end of the first pipe is received within the bell end of the second pipe where the internal gasket sealingly engages with first pipe, and the bell end reinforcing device mechanically interfaces with the pipe stop to inhibit relative axial movement between the first pipe and second pipe.

Aspect 17 is the pipe system of Aspect 16, wherein: the pipe stop comprises a groove positioned about the inner circumference of the pipe stop; the bell end reinforcing device comprises a groove positioned about the inner circumference of the bell end reinforcing device; and the inner groove of the pipe stop and the inner groove of the bell end reinforcing device mechanically interface to form a dovetail connection, the dovetail connection inhibiting relative axial movement between the first pipe and second pipe.

Aspect 18 is the pipe system of any one of Aspects 16 or 17 wherein the pipe stop comprises two components, each component comprising a flange, wherein the flanges engagingly coupled to form a hinged connection; and the bell end reinforcing device comprises two components, each component comprising a flange, wherein the flanges engagingly coupled to form a hinged connection.

Aspect 19 is the pipe system of any one of Aspects 16 through 18, wherein the groove of the pipe stop extends about a portion of the inner circumference of the pipe stop, the groove of the bell end reinforcing device extends about a portion of the bell end reinforcing device, and the bell end reinforcing device is axially rotated such that the groove of the bell end reinforcing device mechanically engages with the groove of the pipe stop to form the dovetail connection.

Aspect 20 is a pipe system, comprising: a first pipe having a spigot end coupled to an external pipe stop; and a pipe fitting having a bell end and an internal gasket, the second pipe coupled to a bell end reinforcing device, wherein: the spigot end of the first pipe is received within the bell end of the pipe fitting where the internal gasket sealingly engages with first pipe, and the bell end reinforcing device mechanically interfaces with the pipe stop to inhibit relative axial movement between the first pipe and second pipe.

Aspect 21 is a method of sealing two piping elements comprising: receiving a spigot end of a first pipe into the bell end of a second pipe, the bell end comprising a groove housing a gasket, and the spigot end contacting the gasket; and applying a bell end reinforcing device and/or pipe stop to at least a portion of the exterior of the bell end of the second piping element and/or the spigot end of the first piping segment.

## Claims

1. A pipe system comprising:
a first pipe comprising a bell end and a groove formed in the bell end,
a gasket positioned within the groove;
a second pipe comprising a spigot end, the spigot end position within the bell end of the first pipe and in contact with the gasket; and
a bell end reinforcing device positioned external to at least a portion of the bell end of the first pipe, the bell end reinforcing device providing structural reinforcement to an exterior surface of the bell end.

2. The pipe system of claim 1, wherein the bell end reinforcing device provides structural reinforcement to the exterior surface via external compression.

3. The pipe system of claim 1, wherein the first pipe and the second pipe comprise PVC.

4. The pipes system of claim 1, wherein the bell end reinforcing device is positioned at the distal end of the bell end and does not extend over a portion superior to the groove.

5. The pipe system of claim 1, wherein the bell end reinforcing device is positioned at the distal end of the bell end and extends over a portion of the bell end superior to the groove.

6. The pipe system of claim 1, wherein the bell end reinforcing device encompasses substantially all of the portion of the bell end superior to the groove.

7. The piping system of claim 1, wherein the bell end reinforcing device encompasses all of the portion of the bell end superior to the groove, and further extends over a portion of the first pipe distal the bell end.

8. The pipe system of claim 1, wherein the bell end reinforcing device is coupled to the bell end by one or more annular ridges positioned about the inner surface of the bell end reinforcing device.

9. The pipe system of claim 1, wherein the bell end reinforcing device encompasses a gasket positioned within the bell end reinforcing device.

10. The pipe system of claim 1, further comprising a pipe stop positioned external to at least a portion of the spigot end of the first pipe, the pipe stop mechanically interfacing with the bell end reinforcing device to inhibit relative axial movement between the first pipe and the second pipe.

11. The pipe system of claim 10, wherein the pipe stop is coupled to the spigot end by one or more annular ridges positioned about the inner surface of the pipe stop.

12. The pipe system of claim 11, wherein the bell end reinforcing device is coupled to the bell end by one or more annular ridges positioned about the inner surface of the bell end reinforcing device.

13. The pipe system of claim 10, wherein the pipe stop and/or bell end reinforcing device comprise a single component.

14. The pipe system of claim 10, wherein the pipe stop and/or bell end reinforcing device comprise two of more components.

15. The pipe system of claim 10, further comprising an expansion gasket positioned at the mechanical interface between the pipe stop and the bell end reinforcing device.

16. A pipe system, comprising:
a first pipe having a spigot end coupled to an external pipe stop; and
a second pipe having a bell end and an internal gasket, the second pipe coupled to a bell end reinforcing device, wherein:
the spigot end of the first pipe is received within the bell end of the second pipe where the internal gasket sealingly engages with first pipe, and
the bell end reinforcing device mechanically interfaces with the pipe stop to inhibit relative axial movement between the first pipe and second pipe.

17. The pipe system of claim 16, wherein:
the pipe stop comprises a groove positioned about the inner circumference of the pipe stop;
the bell end reinforcing device comprises a groove positioned about the inner circumference of the bell end reinforcing device; and
the inner groove of the pipe stop and the inner groove of the bell end reinforcing device mechanically interface to form a dovetail connection, the dovetail connection inhibiting relative axial movement between the first pipe and second pipe.

18. The pipe system of claim 16, wherein:
the pipe stop comprises two components, each component comprising a flange, wherein the flanges engagingly coupled to form a hinged connection; and
the bell end reinforcing device comprises two components, each component comprising a flange, wherein the flanges engagingly coupled to form a hinged connection.

19. The pipe system of claim 16, wherein the groove of the pipe stop extends about a portion of the inner circumference of the pipe stop, the groove of the bell end reinforcing device extends about a portion of the bell end reinforcing device, and the bell end reinforcing device is axially rotated such that the groove of the bell end reinforcing device mechanically engages with the groove of the pipe stop to form the dovetail connection.

20. A pipe system, comprising:
a first pipe having a spigot end coupled to an external pipe stop; and
a pipe fitting having a bell end and an internal gasket, the second pipe coupled to a bell end reinforcing device, wherein:
the spigot end of the first pipe is received within the bell end of the pipe fitting where the internal gasket sealingly engages with first pipe, and
the bell end reinforcing device mechanically interfaces with the pipe stop to inhibit relative axial movement between the first pipe and second pipe.
